Europäisches Patentamt

European Patent Office

Office européen des brevets

(11) Publication number: **0 222 562 B1**

(12) EUROPEAN PATENT SPECIFICATION

(45) Date of publication of patent specification: **15.04.92**    (51) Int. Cl.⁵: **B31F 5/00**, B65H 21/00, B29C 65/08

(21) Application number: **86308487.7**

(22) Date of filing: **30.10.86**

(54) **Apparatus for lap splicing a surface type fastener tape or like strip.**

(30) Priority: **31.10.85 JP 167686/85**

(43) Date of publication of application:
**20.05.87 Bulletin  87/21**

(45) Publication of the grant of the patent:
**15.04.92 Bulletin  92/16**

(84) Designated Contracting States:
**DE FR GB IT**

(56) References cited:
**EP-A- 0 129 297      DE-A- 1 946 444**
**DE-A- 2 537 888      FR-A- 2 146 517**
**FR-A- 2 207 010      JP-A-52 014 659**
**US-A- 2 705 693      US-A- 3 334 004**
**US-A- 3 449 195      US-A- 3 687 787**
**US-A- 4 071 388      US-A- 4 128 212**
**US-A- 4 323 786**

**PATENT ABSTRACTS OF JAPAN, vol. 8, no.
158 (M-311)[1595], 21st July 1984; & JP-A-59
54 465 (SHINKO DENKI K.K.) 29-03-1984**

(73) Proprietor: **YOSHIDA KOGYO K.K.**
**No. 1 Kanda Izumi-cho Chiyoda-ku
Tokyo(JP)**

(72) Inventor: **Nishiyama, Hissai
547, Hayaboshi Fuchu-machi
Nei-gun Toyama-ken(JP)**

(74) Representative: **White, Martin David et al
MARKS & CLERK 57/60 Lincoln's Inn Fields
London WC2A 3LS(GB)**

## Description

### BACKGROUND OF THE INVENTION

This invention relates to an apparatus for splicing strips or bands of desired material, or two parts of the same strip or band, end to end in lapping relation to each other. The splicing apparatus of this invention is of particular utility in conjunction with an elongate fastener tape having a multiplicity of loops or hooks formed thereon, which tape is to be severed into desired lengths for use as the known surface type fasteners in combination with complementary fastener members having hooks or loops thereon.

Japanese Patent Publication No. 52-14659 teaches a splicing apparatus wherein the ends of two strips are tapped one over the other, and the lapping ends are united under heat and pressure, as by use of an ultrasonic horn, to form a continuous length of such strips. However, this patent discloses no means whatsoever as to how the ends of two strips to be spliced are brought into lapping relation with each other.

An obvious method of attaining the above objective might be to place the end of one strip over that of the other from above. This solution is objectionable in view of the large space required for carrying the end of one strip into lapping relation with that of the other. Further the ultrasonic horn or equivalent means would have to be retracted away from its normal working position so as not to interfere with the lapping operation. For these reasons the splicing apparatus would become inordinately bulky in size and complex in construction.

Additional difficulties would manifest themselves if the strips to be spliced are pliant. The end portion of one strip, while being moved over into lapping relation with the end of the other strip, might sway, twist, curve or bend and so fail to properly overlap the other strip.

US-A-3 687 787, on which the preamble of claim 1 is based, discloses an apparatus for cutting off a defective part of a web which is being fed in a predetermined direction, and for splicing the thus created two parts of the web into a continuous length by forming a lap joint of their ends, comprising:

(a) fixed frame means ;

(b) a fixed gripping jaw assembly mounted to the frame means and normally permitting the web to be fed in the predetermined direction therethrough, the fixed gripping jaw assembly being capable of firmly gripping the web as required;

(c) linear guide means mounted to the frame means;

(d) a reciprocatingly movable gripping jaw assembly disposed upstream of the fixed gripping jaw assembly with respect to the predetermined travelling direction of the web and mounted to the guide means for linear movement toward and away from the fixed gripping jaw assembly, the movable gripping jaw assembly being normally held away from the fixed gripping jaw assembly and permitting the web to be fed in the predetermined direction therethrough, the movable gripping jaw assembly being capable of firmly gripping the web as required;

(e) retractable cutter means adapted and arranged to be disposed between the fixed and movable gripping jaw assemblies and operable for cutting off said defective part of the web;

(f) said linear guide means and said movable gripping jaw assembly being adapted and arranged to position the movable gripping jaw assembly, upon movement of the movable gripping jaw assembly toward the fixed gripping jaw assembly, so as to provide a predetermined offset between the positions of the fixed and movable gripping jaw assemblies such that, with the defective part of the web cut off, the end portions of the web protruding from the fixed and movable gripping jaw assemblies are arranged substantially parallel to each other but are offset from each other to an extent approximately equal to the thickness of the web, with the protruding end portions of the web in lapping relation with each other; and

(g) uniting means disposed on that side of the fixed gripping jaw assembly which is directed toward the movable gripping jaw assembly, for uniting the lapping end portions of the two parts of the web.

However, the retractable cutter means in US-A-3 687 787 is only a single cutter means, so that two operations of the cutter means are, or would be, required to cut out a defective part of the web.

Also, the linear guide means and reciprocatingly movable gripping jaw assembly are arranged so that the latter moves across the predetermined direction of feed of the web at an angle, so that the amount of offset is variable and is difficult to control accurately.

US-A-4 071 388 discloses (FIG. 11) a tape transfer device comprising two pairs of cutters, spaced from each other along the direction of travel of two tapes, in an impulse heat jointer for wrapping tapes of wire cables.

FR-A-2 146 517 discloses (Figs. 4-13) an apparatus for splicing a surface type fastener tape having a multiplicity of protruberant elements such as loops or hooks, the apparatus comprising a jaw assembly provided with grooves for accommodating the protruberant elements.

## SUMMARY OF INVENTION

According to the present invention, there is provided an apparatus for cutting off a defective part of a strip, as set out in the appended claims, to which reference is hereby directed.

The present invention is based upon a novel method of lapping two strips, or two parts of the same strip, one over the other without the difficulties pointed out previously, resulting in the provision of an improved apparatus of simplified, compact construction.

The invention provides an apparatus as set forth in claim 1.

The apparatus according to the invention comprises a fixed gripping jaw assembly and a movable gripping jaw assembly disposed substantially opposite each other, with the latter being movable linearly toward and away from the former. The fixed gripping jaw assembly is for releasably gripping a first strip, or a first part of a strip, at such a point thereon that an end portion of the first strip protrudes from the fixed toward the movable gripping jaw assembly. The movable jaw assembly is for releasably gripping a second strip, or a second part of the same strip, at such a point thereon that an end portion of the second strip protrudes from the movable toward the fixed gripping jaw assembly. There is a predetermined offset between the positions of the two gripping jaw assemblies, such that the end portions of the two strips are, while being disposed in parallel planes, offset from each other to an extent approximately equal to the thickness of each strip. Thus, when the movable gripping jaw assembly is moved linearly toward the fixed gripping jaw assembly along the parallel planes of the strip end portions, the end portion of the second strip is carried into lapping relation with the end portion of the first strip. The apparatus further comprises means, typically comprising an ultrasonic horn and an anvil, disposed on that side of the fixed gripping jaw assembly which is directed toward the movable gripping jaw assembly, for uniting the lapping end portions of the first and second strips.

It should be appreciated that the lapping of the two strips is accomplished by the rectilinear movement of the movable gripping jaw assembly toward the fixed gripping jaw assembly. So transported rectilinearly, the end portion of the second strip will hardly sway or twist but will lap over the end portion of the first strip in proper registration and without the likelihood of collision in so doing.

Preferably, the lapping end portions of the strips are ultrasonically fused together between a fixed anvil, which is disposed close to the fixed gripping jaw assembly, and an ultrasonic horn movable toward and away from the anvil in a direction at right angles to the parallel planes of the strip end portions. The end portion of the first strip, protruding from the fixed gripping jaw assembly, can rest firmly on the anvil against the possibility of displacement or deformation as the end portion of the second strip is placed thereon. The ultrasonic horn need be held only a minimal distance away from the anvil during the lapping operation since the end portion of the second strip is transported linearly into lapping relation with the end portion of the first strip. This arrangement of the horn and anvil, combined with the linear travel of the movable gripping jaw assembly, serves to make the apparatus extremely simple in construction and compact in size.

In the preferred embodiment disclosed herein, the apparatus of this invention is adapted for splicing successive lengths of surface type fastener tape which have been tentatively joined together as by stapling. The exemplified apparatus is equipped with means for detecting and cutting off all defective parts, including the tentative joints, of the fastener tape as the latter is fed through the apparatus. The ends created by cutting off each defective part can then be automatically fused together into a unitary lap joint, so that the manufacture of surface type fasteners can be greatly facilitated and streamlined.

The above and other features and advantages of this invention and the manner of realizing them will become more apparent, and the invention itself will best be understood, from a study of the following description and appended claims, with reference had to the attached drawings showing the preferred embodiment of the invention.

## BRIEF DESCRIPTION OF THE DRAWINGS

FIG. 1 is a side elevation, partly shown in section for clarity, of the preferred embodiment of splicing apparatus constructed in accordance with this invention;

FIG. 2 is a vertical section through the splicing apparatus of FIG. 1, taken along the line II-II therein and showing in particular the movable gripping jaw assembly;

FIGS. 3A, 3B and 3C are a series of fragmentary, enlarged sectional views showing the sequential steps of the operation of the splicing apparatus of FIG. 1; and

FIG. 4 is a perspective view of the surface type fastener tape handled by the splicing apparatus of FIG. 1, the fastener tape having a lap joint created by the apparatus.

## DESCRIPTION OF THE PREFERRED EMBODIMENT

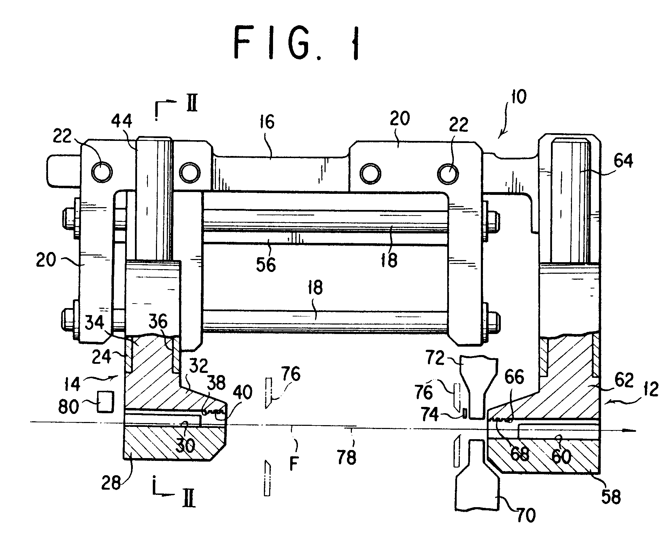

The invention will now be described in detail as embodied in an apparatus for splicing successive lengths of surface type fastener tape that have been tentatively lap jointed as by stapling. Generally designated 10 in FIG. 1, the representative splicing apparatus comprises a fixed gripping jaw assembly 12 and a movable gripping jaw assembly 14. The fixed gripping jaw assembly 12 is rigidly mounted to a frame 16. The movable gripping jaw assembly 14 is slidably mounted to a pair of guide rods 18 extending horizontally with a vertical spacing therebetween, so that the movable gripping jaw assembly 14 is horizontally movable toward and away from the fixed gripping jaw assembly 12. The guide rods 18 extend between, and are rigidly supported by, a pair of L shaped support members 20 fastened at 22 to the frame 16 and depending therefrom.

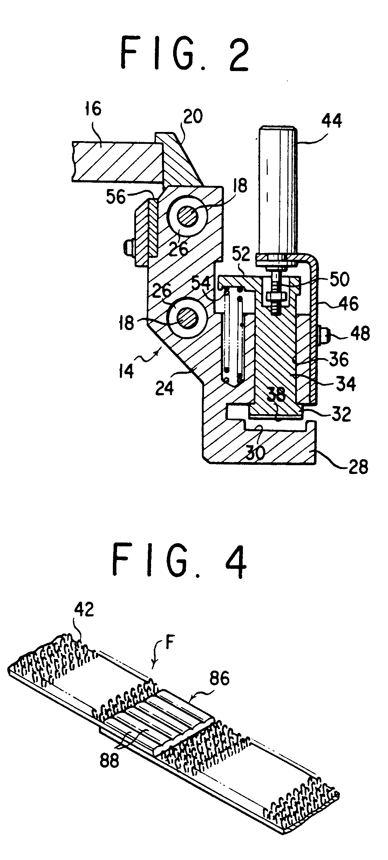

With reference directed also to FIG. 2 the movable gripping jaw assembly 14 has a body part 24 which is bored to slidably receive the pair of guide rods 18 via bushings 26. The body part 24 extends downwardly to terminate in a fixed jaw 28. An upwardly open groove 30 is defined in the fixed jaw 28 by way of a guideway along which the fastener tape F is guided through the movable gripping jaw assembly 14 in a predetermined direction, which is rightward as viewed in FIG. 1. It is thus seen that the movable gripping jaw assembly 14 is disposed upstream of the fixed gripping jaw assembly 12 with respect to the predetermined travelling direction of the fastener tape F to be spliced.

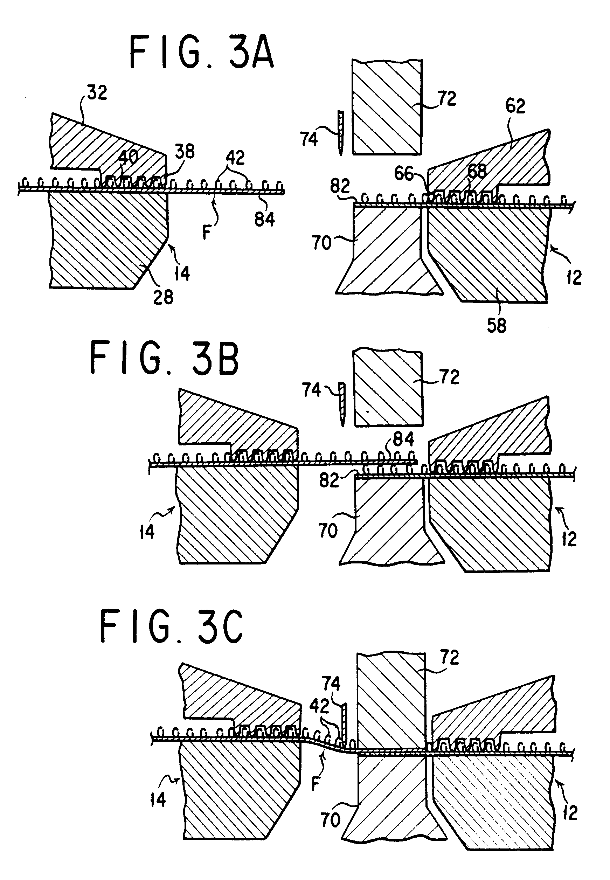

Another important component of the movable gripping jaw assembly 14 is a movable jaw 32 formed in one piece with a stem portion 34 which is slidably engaged in a bore 36 extending vertically through the body part 24 of the movable gripping jaw assembly. The movable jaw 32 is thus movable up and down relative to the fixed jaw 28 for engaging and disengaging the fastener tape F in the tape guideway 30. A plurality of teeth 38 are formed on the bottom face of the movable jaw 32 to define therebetween grooves 40 extending transversely of the fastener tape F. As will be seen by referring to FIG. 3A, for example, these grooves 40 are intended to accommodate the protuberant elements, herein shown as hooks 42, on the fastener tape F when the movable jaw 32 is depressed to grip the fastener tape between itself and the fixed jaw 28.

The movable gripping jaw assembly 14 further comprises actuator means for moving the movable jaw 32 toward and away from the fixed jaw 28. As shown also in FIG. 2, the actuator means include a fluid actuated cylinder 44, preferably an air cylinder of the single acting type, which is mounted upstandingly on a cylinder mount 46 rigidly fastened at 48 to the body part 24 of the movable gripping jaw assembly 14. The air cylinder 44 has a piston rod 50 depending therefrom and coupled to the stem portion 34 of the movable jaw 32. Installed between the body part 24 of the movable gripping jaw assembly 14 and a flange 52 on the top end of the movable jaw stem portion 34, a helical compression spring 54 acts to cause compression of the air cylinder 44, holding the movable jaw 32 away from the fixed jaw 28, when the air cylinder is not actuated pneumatically. The fastener tape F is to be fed through the movable gripping jaw assembly 14 when the movable jaw 32 is thus held away from the fixed jaw 28.

FIG. 2 further indicates that the body part 24 of the movable gripping jaw assembly 24 is affixed to a drive belt 56 extending along the pair of guide rods 18. This drive belt is to be driven bidirectionally by any known or suitable means, not shown, for moving the movable gripping jaw assembly 24 toward and away from the fixed gripping jaw assembly 12 along the pair of guide rods 18.

With reference back to FIG. 1 the fixed gripping jaw assembly 12 is of essentially the same construction as the movable gripping jaw assembly 14 set forth in the foregoing except that the former is not movable relative to the frame 16. Suffice it to say, therefore, that the fixed gripping jaw assembly 12 comprises a fixed jaw 58 having an upwardly open tape guideway 60 defined therein, a movable jaw 62, and an air cylinder 64 for moving the movable jaw 62 toward and away from the fixed jaw 58. The movable jaw 62 has formed on its underside a plurality of teeth 66 defining grooves 68 for accommodating the hooks 42 of the fastener tape F when the movable jaw 62 is depressed to grip the tape.

Although the fixed and movable gripping jaw assemblies 12 and 14 are of like configuration as above, there is a predetermined offset between the vertical positions of their fixed gripping jaws 28 and 58, or of the tape guideways 30 and 60 defined therein. An inspection of FIG. 1 will reveal that the tape guideway 30 of the movable gripping jaw assembly 14 is higher than the tape guideway 60 of the fixed gripping jaw assembly 12. The difference between the vertical positions of the tape guideways 30 and 60 is approximately equal to the thickness of the fastener tape F. This difference between the vertical positions of the tape guideways 30 and 60 is essential for successfully creating a lap joint of the fastener tape F by the linear travel of the movable gripping jaw assembly 14, as will be better understood from the operational description to be given subsequently.

FIG. 1 shows at 70 a fixed anvil disposed close to the fixed jaw 58 of the fixed gripping jaw assembly 12, on its side directed toward the movable gripping jaw assembly 14. The top of this anvil 70 is substantially flush with the guideway 60 of the fixed gripping jaw assembly 12. Disposed above the anvil 70 is an ultrasonic horn 72 movable vertically toward and away from the anvil 70. The ultrasonic horn 72 coacts with the anvil 70 to ultrasonically fuse together the lapping ends of the fastener tape F.

Disposed side by side with the ultrasonic horn 72 is a tape retainer 74 which may be rigidly coupled to the horn for joint up and down motion therewith. The tape retainer 74 takes the form of a flat plate generally extending across the fastener tape F and having its bottom edge approximately in coplanar relation with the bottom face of the ultrasonic horn 72. Thus, moving up and down with the horn 72 into and out of engagement with the fastener tape F, the tape retainer 74 functions to hold the tape against displacement when its ends are being ultrasonically fused together.

Seen at 76 in FIG. 1 are two retractable pairs of cutting blades which, when the movable gripping jaw assembly 14 is held away from the fixed gripping jaw assembly 12 as in FIG. 1, are disposed between the two gripping jaw assemblies 12 and 14, with a spacing between the two cutter blade pairs in the longitudinal direction of the fastener tape F. The cutting blade pairs 76 cut off any defective part of the fastener tape P, including a tentative joint 78, formed as by stapling, of the successive lengths of the fastener tape.

A flaw detector 80 is disposed immediately upstream of the movable gripping jaw assembly 14 for detecting the tentative joint 78 and all other defective parts of the fastener tape F in any known or suitable manner.

Normally, as illustrated in FIG. 1, the movable gripping jaw assembly 14 is held away from the fixed gripping jaw assembly 12, and the movable jaws 32 and 62 of both jaw assemblies are held away from the fixed jaws 28 and 58, permitting the fastener tape F to be fed through the guideways 30 and 60 at a constant speed. The feeding of the fastener tape F is suspended automatically when any defective part thereof, such as the tentative joint 78, is detected by the flaw detector 80. Then the air cylinders 44 and 64 are activated to cause the descent of the movable jaws 32 and 62 of both gripping jaw assemblies 12 and 14 for gripping the fastener tape F at its points on both sides of the defective part. Then the defective part of the fastener tape F is cut off by the two pairs of cutting blades 76, with the result that the end portions of the thus created two parts of the fastener tape protrude from the fixed and movable gripping jaw assemblies 12 and 14 toward each other.

As depicted in FIG. 3A, the end portion 82 of the fastener tape F protruding from the fixed gripping jaw assembly 12 rests securely on the anvil 70. The other end portion 84 of the fastener tape F protrudes from the movable gripping jaw 14 in a plane parallel to the plane of the end portion 82. As has been stated, the movable gripping jaw assembly 14 is displaced upwardly of the fixed gripping jaw assembly 12 to an extent approximately equal to the thickness of the fastener tape F.

Consequently, when the movable gripping jaw assembly 14 is subsequently moved toward the fixed gripping jaw assembly 12 as shown in FIG. 3B, the fastener tape end portion 84 carried by the movable gripping jaw assembly comes to overlap the fastener tape end portion 82 over the anvil 70.

Then the ultrasonic horn 72 is descended, as in FIG. 3C, for pressing the lapping end portions 82 and 84 against the anvil 70 and for ultrasonically fusing these end portions to each other. As the ultrasonic horn 72 is lowered, so is the tape retainer 74, which then becomes engaged between two neighboring transverse rows of hooks 42 of the fastener tape end portion 84. The fastener tape end portion 84 tends to move longitudinally in either direction as the ultrasonic horn 72 depresses the hooks 42 during its descent from its FIG. 3B position to that of FIG. 3C. Actually, however, the fastener tape end portion 84 is restrained from rightward displacement as the toothed movable jaw 32 of the movable gripping jaw assembly 14 presses the fastener tape against the fixed jaw 28. The leftward displacement of the fastener tape end portion 84, on the other hand, is prevented as the tape retainer 74 becomes engaged as aforesaid between the transverse rows of fastener tape hooks 42 with the descent of the ultrasonic horn 72. Thus the fastener tape end portion 82 and 84 can be fused together in neatly lapping relation to each other.

FIG. 4 shows an example of fused lap joint 86 thus created on the fastener tape F by the splicing apparatus 10 of FIG. 1. The exemplified lap joint has several parallel ridges 88 extending longitudinally of the fastener tape F. The parallel ridges 88 are intended to enhance the strength of the lap joint 86 and at the same time to maintain the joint suitably pliant. The same objectives are attainable, however, not only by the parallel ridges 88 but also by, for example, crisscross ridges, the present invention being not particularly concerned with any particular type of joint.

## Claims

1. An apparatus (10) for cutting off a defective part, particularly a tentative joint (78) formed as by stapling, of a surface type fastener tape (F) or like strip which is being fed in a predetermined direction, and for splicing the thus created two parts of the strip (F) into a continuous length by forming a lap joint of their ends, comprising:

(a) fixed frame means (16);

(b) a fixed gripping jaw assembly (12) mounted to the frame means (16) and normally permitting the strip (F) to be fed in the predetermined direction therethrough, the fixed gripping jaw assembly (12) being capable of firmly gripping the strip (F) as required;

(c) linear guide means (18) mounted to the frame means (16);

(d) a reciprocatingly movable gripping jaw assembly (14) disposed upstream of the fixed gripping jaw assembly (12) with respect to the predetermined travelling direction of the strip (F) and mounted to the guide means (18) for linear movement toward and away from the fixed gripping jaw assembly (12), the movable gripping jaw assembly (14) being normally held away from the fixed gripping jaw assembly (12) and permitting the strip (F) to be fed in the predetermined direction therethrough, the movable gripping jaw assembly (14) being capable of firmly gripping the strip (F) as required;

(e) retractable cutter means (76) adapted and arranged to be disposed between the fixed and movable gripping jaw assemblies (12, 14) and operable for cutting off said defective part of the strip (F);

(f) said linear guide means (18) and said movable gripping jaw assembly (14) being adapted and arranged to position the movable gripping jaw assembly (14), upon movement of the movable gripping jaw assembly (14) toward the fixed gripping jaw assembly (12), so as to provide a predetermined offset between the positions of the fixed and movable gripping jaw assemblies (12, 14) such that, with the defective part of the strip (F) cut off, the end portions of the strip (F) protruding from the fixed and movable gripping jaw assemblies (12, 14) are arranged substantially parallel to each other but are offset from each other to an extent approximately equal to the thickness of the strip (F), with the protruding end portions of the strip (F) in lapping relation with each other; and

(g) uniting means (70, 72) disposed on that side of the fixed gripping jaw assembly (12) which is directed toward the movable gripping jaw assembly (14), for uniting the lapping end portions of the two parts of the strip (F);

characterised in that said retractable cutter means (76) comprises two pairs of opposed cutting edges, said pairs being spaced from each other along the direction of travel of said strip (F); whereby said defective part of said strip (F) is locatable between said pairs of cutting edges, with one pair upstream of said defective part and one pair downstream of said defective part so as to allow said defective part to be removed from said strip (F) by the substantially simultaneous cutting actions of said two pairs of cutting edges;

in that said retractable cutter means (76) is adapted and arranged to be operable for cutting off said defective part of the strip (F) while the latter is being firmly gripped by the fixed and movable gripping jaw assemblies (12, 14) with the result that the end portions of the thus created two parts of the strip (F) protrude from the fixed and movable gripping jaw assemblies (12, 14) toward each other;

and in that said linear guide means (18) and said movable gripping jaw assembly (14) are adapted and arranged to reciprocate the movable gripping jaw assembly (14) along a linear path which maintains said predetermined offset between the positions of the fixed and movable gripping jaw assemblies (12, 14) in all positions of the movable jaw assembly (14).

2. An apparatus (10) as set forth in claim 1, wherein the strip (F) has formed thereon a multiplicity of protuberant elements (42) such as the loops or hooks of a surface type fastener tape, and wherein each of the fixed and movable gripping jaw assemblies (12, 14) comprises:

(i) a fixed jaw (28,58);

(ii) a movable jaw (32, 62) movable toward and away from the fixed jaw (28, 58) for engaging and disengaging the strip (F) and having a plurality of grooves (40, 68) defined therein for accommodating the protuberant elements (42) on the strip (F) when said movable jaw is moved toward the fixed jaw 28, 58); and

(iii) actuator means (44) for moving the movable jaw (32, 62) toward and away from the fixed jaw (28, 58).

3. An apparatus (10) as set forth in claim 1 or 2, wherein the uniting means (70,72) comprises:

(a) an anvil (70); and

(b) an ultrasonic horn (72) movable toward and away from the anvil (70) and coacting therewith for ultrasonically fusing together the lapping end portions of the stip (F).

4. An apparatus (10) as set forth in claim 3, wherein the strip has formed thereon a multiplicity of protuberant elements (42) such as the loops or hooks of a surface type fastener tape, and wherein the apparatus further comprises a strip retainer (74) movable with the ultrasonic horn (72) of the uniting means (70, 72) into and out of engagement between the protuberant elements (42) on the strip (F) for positively holding against displacement the end portion of the strip (F) being held by the movable jaw assembly (14) when the end portions are being ultrasonically fused together.

5. An apparatus (10) as set forth in claim 1, 2, 3 or 4 and further comprising a flaw detector (80) disposed upstream of the movable gripping jaw assembly (14) with respect to the travelling direction of the strip (F) for detecting any defective part of the strip (F).

**Revendications**

1. Appareil (10) pour découper une partie défectueuse, en particulier un assemblage provisoire (78) obtenu, par exemple par agrafage, d'un ruban auto-accrochant (F) ou d'une bande analogue qui défile dans une direction prédéterminée et pour raccorder les deux parties ainsi obtenues de la bande (F) en une longueur continue, en formant un assemblage à recouvrement avec leurs extrémités, comprenant :

(a) un moyen de cadre fixe (16);

(b) un assemblage fixe (12) à mâchoires de préhension monté sur le moyen de cadre (16) et permettant normalement à la bande (F) de défiler dans la direction prédéterminée en passant à travers elles, l'assemblage fixe (12) à mâchoires de préhension étant apte à saisir fermement la bande (F), si nécessaire;

(c) un moyen de guidage linéaire (18) monté sur le moyen de cadre (16);

(d) un assemblage mobile (14) à mâchoires de préhension apte à effectuer un mouvement de va-et-vient, disposé en amont de l'assemblage fixe (12) à mâchoires de préhension par rapport à la direction de défilement prédéterminée de la bande (F) et monté sur le moyen de guidage (18) pour pouvoir effectuer un mouvement linéaire en direction et à l'écart de l'assemblage fixe (12) à mâchoires de préhension, l'assemblage mobile (14) à mâchoires de préhension étant normalement tenu à l'écart de l'assemblage fixe (12) à mâchoires de préhension et permettant à la bande (F) de défiler dans la direction prédéterminée en passant à travers elles, l'assemblage mobile (14) à mâchoires de préhension étant apte à saisir fermement la bande (F), si nécessaire;

(e) un moyen de coupe rétractable (76) conçu et aménagé pour être disposé entre les assemblages fixe et mobile (12, 14) à mâchoires de préhension et pouvant être mis en service pour découper ladite partie défectueuse de la bande (F);

(f) ledit moyen de guidage linéaire (18) et ledit assemblage mobile (14) à mâchoires de préhension étant conçus et aménagés pour positionner l'assemblage mobile (14) à mâchoires de préhension, suite au mouvement de l'assemblage mobile (14) à mâchoires de préhension en direction de l'assemblage fixe (12) à mâchoires de préhension, de façon à procurer un décalage prédéterminé entre les positions des assemblages fixe et mobile (12, 14) à mâchoires de préhension de telle sorte que, une fois que la partie défectueuse de la bande (F) a été découpée, les portions terminales de la bande (F) faisant saillies au-delà des assemblages fixe et mobile (12, 14) à mâchoires de préhension sont disposées essentiellement parallèlement l'une à l'autre, tout en étant décalées l'une de l'autre sur une distance approximativement égale à l'épaisseur de la bande (F), les portions terminales de la bande (F) faisant saillie se trouvant en contact de recouvrement mutuel; et

(g) un moyen de jonction (70, 72) disposé du côté de l'assemblage fixe (12) à mâchoires de préhension, qui est orienté vers l'assemblage mobile (14) à mâchoires de préhension, destiné à joindre les portions terminales des deux parties de la bande (F) qui se chevauchent;

caractérisé en ce que ledit moyen de coupe rétractable (76) comprend deux paires de bords coupants opposés, lesdites paires étant écartées l'une de l'autre dans la direction de défilement de ladite bande (F); dans lequel ladite partie défectueuse de ladite bande (F) peut venir se loger entre lesdites paires de bords coupants, une paire étant située en amont de ladite partie défectueuse et une paire étant située en aval de ladite partie défectueuse afin de permettre de retirer ladite partie défectueuse de ladite bande (F) à l'intervention des mises en oeuvre de coupe essentiellement simultanées desdites deux paires de bords coupants;

en ce que ledit moyen de coupe rétractable (76) est conçu et arrangé pour être mis en service à des fins de découpe de la partie défectueuse de la bande (F), tandis que ce dernier est saisi fermement par les assemblages fixe et mobile (12, 14) à mâchoires de préhension, avec pour conséquence que les portions terminales des deux parties ainsi obtenues de la bande (F) font saillie par rapport aux assemblages fixe et mobile (12, 14) (12, 14) à mâchoires de préhension, l'une vers l'autre;

et en ce que ledit moyen de guidage linaire (18) et ledit assemblage mobile (14) à mâchoires de préhension sont conçus et arrangés pour faire en sorte que l'assemblage mobile (14) à mâchoires de préhension effectue un mouvement de va-et-vient le long d'une voie linéaire qui maintient ledit écartement prédéterminé entre les positions des assemblages fixe et mobile (12, 14) à mâchoires de préhension, dans toutes les positions occupées par l'assemblage mobile à mâchoires (14).

2. Appareil (10) selon la revendication 1, dans lequel on façonne plusieurs éléments protubérants (42) sur la bande (F), tels que les boucles ou les crochets d'un ruban auto-accrochant et dans lequel chacun des assemblages fixe et mobile (12, 14) à mâchoires de préhension comprend :

(i) une mâchoire fixe (28, 58);

(ii) une mâchoire mobile (32, 62) apte à effectuer un mouvement en direction et à l'écart de la mâchoire fixe (28, 58) pour venir se mettre en contact avec la bande (F) et pour se séparer de cette dernière, et dans laquelle sont définies plusieurs rainures (40, 68) dans lesquelles viennent se loger les éléments protubérants (42) de la bande (F) lorsque ladite mâchoire mobile se déplace en direction de la mâchoire fixe (28, 58); et

(iii) un moyen d'entraînement (44) destiné à déplacer la mâchoire mobile (32, 62) en direction et à l'écart de la mâchoire fixe (28, 58).

3. Appareil (10) selon la revendication 1 ou 2, dans lequel le moyen (70, 72) destiné à réaliser une jonction comprend :

(a) une enclume (70); et

(b) un cornet à ultrasons (72) apte à se déplacer en direction et à l'écart de l'enclume (70) et agissant conjointement avec cette dernière, afin de fusionner mutuellement par ultrasons les portions terminales de la bande (F), qui se chevauchent.

4. Appareil (10) selon la revendication 3, dans lequel on a façonné plusieurs éléments protubérants (42) sur la bande, tels que les boucles ou les crochets d'un ruban auto-accrochant, et dans lequel l'appareil comprend, en outre, un dispositif de retenue de bande (74) mobile avec le cornet à ultrasons (72) du moyen (70, 72) destiné à effectuer une jonction, pour venir s'engrener et se désengrener entre les éléments protubérants (42) disposés sur la bande (F) afin de maintenir sûrement à l'encontre du déplacement, la portion terminale de la bande (F) maintenue par l'assemblage mobile à mâchoires (14) lorsqu'on procède à la fusion mutuelle des portions terminales par ultrasons.

5. Appareil (10) selon la revendication 1, 2, 3 ou 4 et comprenant, en outre, un détecteur de défauts (80) disposé en amont de l'assemblage mobile (14) à mâchoires de préhension par rapport à la direction de défilement de la bande (F), destiné à détecter toute partie défectueuse de la bande (F).

**Patentansprüche**

1. Vorrichtung zum Abschneiden eines schadhaften Teils, insbesondere einer beispielsweise durch Heften gebildeten provisorischen Verbindung (78) eines Flächenhaftverschlußbandes (F) oder eines ähnlichen Bandes, das in einer bestimmten Richtung zugeführt wird, und zum Spleißen der so geschaffenen beiden Teile des Bandes (F) in eine fortlaufende Länge durch Ausbilden einer Überlappungsverbindung ihrer Enden, umfassend:

(a) ein ortsfestes Gestell (16);

(b) eine ortsfeste Klemmbackenanordnung (12), die an dem Gestell (16) angebracht ist und normalerweise eine Zufuhr des Bandes (F) in der bestimmtan Richtung ermöglicht, wobei die ortsfeste Klemmbackenanordnung (12) das Band (F) erforderlichenfalls festhalten kann;

(c) eine an dem Gestell (16) angeordnete geradlinige Führungseinrichtung (18);

(d) eine hin- und herbewegbare Klemmbackenanordnung (14), die in Bezug auf die bestimmte Bewegungsrichtung des Bandes (F) stromaufwärts von der ortsfesten Klemmbackenanordnung (12) angeordnet und an der Führungseinrichtung (18) zu einer geradlinigen Bewegung zu der ortsfesten Klemmbackenanordnung (12) hin und von dieser weg gelagert ist, wobei die bewegliche Klemmbackenanordnung (14) normalerweise im Abstand von der ortsfesten Klemmbackenanordnung (12) gehalten ist und die Zufuhr des Bandes (F) in der bestimmten Richtung ermöglicht, wobei die bewegliche Klemmbackenanordnung (14) das Band (F) erforderlichenfalls festhalten kann;

(e) eine zurückziehbare Schneideinrichtung (76), die zwischen der ortsfesten und der beweglichen Klemmbackenanordnung (12,14) angeordnet und zum Abschneiden des schadhaften Teils des Bandes (F) betätigbar ist;

(f) wobei die geradlinige Führungseinrichtung (18) und die bewegliche Klemmbackenanordnung (14) so ausgebildet und angeordnet sind, um die bewegliche Klemmbackenanordnung (14) bei einer Bewegung der bewegliche Klemmbackenanordnung (14) zu der ortsfesten Klemmbackenanordnung (12) hin so zu positionieren, daß zwischen den Positionen der ortsfesten und der beweglichen Klemmbackenanordnung (12,14) ein bestimmter Versatz entsteht, so daß, wenn das schadhafte Teil des Bandes (F) abgeschnitten ist, die von der ortsfesten und von der beweglichen Klemmbackenanordnung (12,14) vorstehenden Endbereiche des Bandes (F) im wesentlichen parallel zueinander angeordnet, aber um einen Betrag gegeneinander versetzt sind, der im wesentlichen der Dicke des Bandes (F) entspricht, wobei die vorspringenden Bereiche des Bandes (F) einander überlappen; und

(g) eine Verbindungseinrichtung (70,72), die auf derjenigen Seite der ortsfesten Klemmbackenanordnung (12) angeordnet ist, die der beweglichen Klemmbackenanordnung (14) zugekehrt ist, um die überlappenden Endbereiche der beiden Teile des Bandes (F) miteinander zu vereinigen;

dadurch **gekennzeichnet**, daß die zurückziehbare Schneideinrichtung (76) zwei einander gegenüberliegende Paare von Schneidkanten umfaßt, die in Bewegungsrichtung des Bandes (F) im Abstand voneinander angeordnet sind; wodurch das schadhafte Teil des Bandes (F) zwischen diesen Paaren von Schneidkanten angeordnet werden kann, wobei sich ein Paar stromaufwärts von dem schadhaften Teil und ein Paar stromabwärts von dem schadhaften Teil befindet, so daß dieses schadhafte Teil durch den im wesentlichen gleichzeitigen Schneidvorgang der beiden Paare von Schneidkanten von dem Band (F) beseitigt werden kann;

daß die zurückziehbare Schneideinrichtung (76) so ausgebildet ist, daß sie betätigbar ist, um das schadhafte Teil des Bandes (F) abzuschneiden, während letzteres von der ortsfesten und von der beweglichen Klemmbackenanordnung (12,14) festgehalten wird, mit dem Ergebnis, daß die Endbereiche der so geschaffenen beiden Teile des Bandes (F) von der ortsfesten und von der beweglichen Klemmbackenanordnung (12,14) zueinander hin vorspringen;

und daß die geradlinige Führungseinrichtung (18) und die bewegliche Klemmbackenanordnung (14) so ausgebildet sind, daß die bewegliche Klemmbackenanordnung (14) längs einer geradlinigen Bahn hin- und herbewegbar ist, die in allen Positionen der beweglichen Klemmbackenanordnung (14) den vorgegebenen Versatz zwischen den Positionen der ortsfesten und der beweglichen Klemmbackenanordnung (12,14) beibehält.

2. Vorrichtung (10) nach Anspruch 1, wobei auf dem Band (F) eine Vielzahl vorspringender Elemente (42), wie z.B. die Schlingen oder die Haken eines Flächenhaftverschlußbandes ausgebildet sind, und wobei die ortsfeste und die beweglichen Klemmbackenanordnung (12,14) jeweils umfaßt:

(i) eine ortsfeste Klemmbacke (28,58);

(ii) eine bewegliche Klemmbacke (32,62), die zu der ortsfesten Klemmbacke (28,58) hin und von dieser weg bewegbar ist, um das Band (F) zu erfassen und freizugeben, und die mehrere Nuten (40,68) aufweist, um die vorspringenden Elemente (42) des Bandes (F) aufzunehmen, wenn die bewegliche Klemmbacke zu der ortsfesten Klemmbacke (28,58) hin bewegt wird; und

(iii) eine Betätigungseinrichtung (44) zum Bewegen der beweglichen Klemmbacke (32,62) zu der ortsfesten Klemmbacke (28,58) hin und von dieser weg.

3. Vorrichtung (10) nach Anspruch 1 oder 2, wobei die Verbindungseinrichtung (70,72) umfaßt:

(a) einen Amboß (70); und

(b) einen Ultraschallgenerator (72), der zu der Amboß (70) hin und von diesem weg bewegbar ist und mit diesem zusammenwirkt, um die überlappenden Endbereiche des Bandes (F) durch Ultraschall miteinander zu verschweißen.

4. Vorrichtung (10) nach Anspruch 3, wobei auf dem Band eine Vielzahl vorspringender Elemente (42), wie z.B. die Schlingen oder die Haken eines Flächenhaftverschlußbandes ausgebildet sind und wobei die Vorrichtung ferner einen Bandhalter (74) umfaßt, der zusammen mit dem Ultraschallgenerator (72) der Verbindungseinrichtung (70,72) mit den vorspringenden Elementen (42) auf dem Band (F) in und außer Eingriff bewegbar ist, um den von der beweglichen Klemmbackenanordnung (14) gehaltenen Endbereich des Bandes (F) gegen eine Verlagerung formschlüssig festzuhalten, wenn die Endbereiche durch Ultraschall miteinander verschweißt werden.

5. Vorrichtung (10) nach Anspruch 1, 2, 3 oder 4 und ferner umfassend einen Fehlerdetektor (80), der in Bezug auf die Bewegungsrichtung des Bandes (F) stromaufwärts von der beweglichen Klemmbackenanordnung (14) angeordnet ist, um ein schadhaftes Teil des Bandes (F) zu ermitteln.

# FIG. 1

EP 0 222 562 B1

# FIG. 2

# FIG. 4

# FIG. 3A

# FIG. 3B

# FIG. 3C